# EUROPÄISCHE PATENTSCHRIFT

(11) **EP 0 427 704 B1**
(45) Veröffentlichungstag und Bekanntmachung des Hinweises auf die Patenterteilung: **10.02.1993**
(21) Anmeldenummer: 91100105.5
(22) Anmeldetag: 12.12.1987
(51) Int. Cl.: A01G 31/00, C05G 3/00

(54) **Verfahren zur Herstellung eines porösen Keramikgranulatats sowie danach hergestelltes Produkt und dessen Verwendung**
Procedure for the fabrication of porous ceramic granulates, the fabricated product and its application
Procédé pour la fabrication de granulat céramique poreux, le produit fabriqué et l'application de produit

(30) Priorität: 19.02.1987 DE 3705204
(43) Veröffentlichungstag der Anmeldung: 15.05.1991
(62) Teilanmeldung aus: 87118463.6
(73) Patentinhaber: EFFEM GmbH, D-27283 Verden (DE)
(72) Erfinder: Lang, Rüdiger, W-5401 Brey (DE)
(74) Vertreter: Goddar, Heinz J., Dr.

(56) Entgegenhaltungen:
- AT-B- 358 311
- DE-A- 2 022 419
- DE-A- 3 414 965
- US-A- 3 993 498

## Beschreibung

Die Erfindung betrifft ein Verfahren zum Herstellen eines porösen Keramikgranulates nach dem Oberbegriff von Anspruch 1 und dessen Verwendung.

Der pflanzliche Stoffwechsel ist im wesentlichen durch folgende Vorgänge charakterisiert: Dissimilation (Atmung), Assimilation (Photosynthese), Nährstoffwechsel, Wasserhaushalt und Transpiration. Für ein optimales Wachstum benötigt die Pflanze, abgesehen von atmosphärischen Einflüssen (Klima, Licht usw.), einen festen Halt und eine kontinuierliche und ausreichende Nährstoff- und Wasserversorgung aus ihrem Substrat. Zusammensetzung und Aufbau des Substrates sind also wesentliche Wachstumsfaktoren.

Pflanzliche Organismen benötigen Wasser nicht nur als Ausgangsverbindung für die Photosynthese, sondern auch als wichtigen Reaktionspartner in Stoffwechselprozessen. Entsprechend hoch ist der Wassergehalt der Organismen: Der Massenanteil an Wasser kann bei höheren Pflanzen bis zu 90 % und mehr der lebenden Substanz betragen. In den Pflanzen findet ein ständiger Wasserfluß statt, der durch permanente Verdunstung (Transpiration) in den oberen Teilen der Pflanze angetrieben wird. Dieser Wasserverlust muß durch entsprechende Wasseraufnahme ausgeglichen werden. Pflanzliche Organismen können für die Wasseraufnahme grundsätzlich die gesamte Oberfläche nutzen. Pflanzen, die eine Wurzel besitzen, versorgen sich jedoch aus dem Substrat.

Die Nährstoffaufnahme ist zu einem großen Teil an Wasser gebunden, weil die Mineralstoffe und zum Teil auch die organischen Stoffe in wässriger Lösung aufgenommen werden. Neben Kohlenstoff, Sauerstoff und Wasserstoff, welche bei der Photosynthese ausgehend von CO₂ und H₂O in organische Moleküle eingebaut werden, benötigen die Pflanzen für ihren Stoffwechsel weitere Elemente: Stickstoff, Schwefel und Phosphor als Nichtmetalle, sowie die Metalle Kalium, Calcium und Magnesium. Außerdem brauchen die meisten Pflanzen zur normalen Entwicklung noch Spurenelemente: Eisen, Mangan, Zink, Kupfer, Bor, Molybdän, Kobalt, sowie Chlor und Silizium, in einigen Fällen auch Natrium und Selen. Die genannten Elemente werden fast alle als essentiell betrachtet; bei unzureichendem Angebot kommt es zu typischen Ausfall- oder Mangelerscheinungen. Für viele Pflanzen ist das Vorhandensein aller essentiellen Elemente im Boden nicht ausreichen. Vielmehr müssen sich ihre Mengen zusätzlich in günstigem Verhältnis zueinander befinden. Darüber hinaus ist die Bindungsform der Nährstoffe an das Substrat und damit deren Verfügbarkeit eine kritische Größe für die Pflanzenversorgung.

Das Wohlergehen der Pflanze ist also in hohem Maße von physikalischen und chemischen Substrateigenschaften abhängig. Wichtige physikalische Parameter sind dabei das Bodenvolumen, die von der mineralogischen Zusammensetzung abhängige Austauschkapazität des Substrates, dessen Körnung und Gefüge, sowie die durch verschiedene Faktoren beeinflußte Stabilität des Substratgefüges. Die Gehalte an organischen Substanzen, wie Wuchs-, Humin-, Hemm-, Resistenzstoffen usw., und an den bereits oben erwähnten essentiellen Elementen aus anorganischen Substanzen stellen die entscheidenden chemischen Parameter des Substrates dar.

Früher wurden als Pflanzensubstrate zahlreiche unterschiedliche Erdgemische verwendet, um den unterschiedlichen Ansprüchen verschiedener Pflanzen gerecht zu werden. In den letzten Jahrzehnten bedient man sich in der Praxis einiger Standarderden und Torfsubstrate, deren Wasser- und Nährstoffhaushalt gut kontrolliert werden kann. Darüber hinaus wird insbesondere bei der Zimmerpflanzenhaltung in letzter Zeit vermehrt die Hydrokulturtechnik eingesetzt, bei der dem meist aus Blähtongranulat bestehenden Substrat die Nährstoffe in pflanzenverfügbarer Form über Gießlösungen zugeführt werden müssen. Das Substrat wird dabei durch Brennen geeigneter Tone bei sehr hohen Temperaturen hergestellt, stellt, wobei es durch innere Gasentwicklung zu einem Aufblähen des Materials kommt, d.h. zu einer unregelmäßigen Blasen- und Porenbildung. Ein derartiges Pflanzensubstrat auf der Basis eines Blähton granulates ist beispielsweise aus der AT-B-358 311 bekannt.

Aufgabe der Erfindung ist es, ein Pflanzensubstrat zur Verfügung zu stellen, das gegenüber dem Stand der Technik deutlich verbesserte physikalische und chemische Eigenschaften aufweist, die an die Anforderungen der jeweiligen Pflanze in einfacher und effektiver Weise angepaßt werden können.

Erfindungsgemäß wird diese Aufgabe bei einem gattungsgemäßen Verfahren dadurch gelöst, daß das Aufschäumen der Ausgangsmischung bei mindestens 0,3 bar Überdruck erfolgt, wobei der Druck bis zum Austrag aus der Düse aufrechterhalten wird.

Dabei kann vorgesehen sein, daß als Korngröße ein Bereich von 1 bis 5 mm Granulatdurchmesser gewählt wird.

Eine weitere Ausführungsform der Erfindung sieht vor, daß das Granulat hinsichtlich der Korngröße folgende Zusammensetzung aufweist: 15 bis 30 Gew.-%, vorzugsweise 25 Gew.-%, Granulat mit einem Durchmesser von 1 bis 2 mm; 40 bis 70 Gew.-%, vorzugsweise 60 Gew.-%, Granulat mit einem Durchmesser von 2 bis 4 mm; und 5 bis 20 Gew.-%, vorzugsweise 15 Gew.-%, Granulat mit einem Durchmesser von 4 bis 5 mm.

Eine andere Ausführungsform der Erfindung sieht die Verwendung des erfindungsgemäßen Pflanzensubstrates als Depot-Träger für Nährstoffe, Düngestoffe und/oder Pestizide vor.

Durch die erfindungsgemäße Verwendung von Granulaten, die nach dem erfindungsgemäßen Verfahren hergestellt sind, wie es (bis auf die erfindungsgemäßen Modifizierungen) in seinen wesentlichen Zügen in der DE-A-34 14 965 beschrieben ist, führt zu einem völlig neuartigen Pflanzensubstrat. Dieses im folgenden als "Schaumton-granulat" bezeichnete Material kann sowohl als Hydrokulturmaterial sowie als Zusatz zu Blumenerde eingesetzt werden. Bei letzterem ist dabei sowohl eine Vermischung mit der Blumenerde als auch eine Schichtung möglich.

Die für die Pflanzenversorgung notwendigen essentiellen Elemente, die bereits weiter oben aufgezählt worden sind, sind im Ausgangsmaterial vorhanden und werden im Produkt in pflanzenverfügbarer Form bereitgestellt. Für Pflanzen mit zusätztlicher Anforderung (z.B. zusätztlicher Phosphorbedarf zur Blütenbildung bei blühenden Pflanzen) wird die Rezeptor durch entsprechende Zusätze ergänzt bzw. werden entsprechende Tone eingesetzt. Somit können für jeden Anwendungsfall optimale Produkte hergestellt werden.

Durch die erfindungsgemäß vorgesehene Korngrößenzusammensetzung des Schaumtongranulats wird eine Granulatschüttung erzielt, die sowohl einen optimalen Flüssigkeitstransport bzw. -austausch im Granulat herstellt als auch über genügend Luftdurchlässigkeit verfügt, um den notwendigen Gasaustausch zu ermöglichen. Beides ist Voraussetzung für eine optimale Pflanzenhaltung.

Durch die Porengröße im Bereich unterhalb von 1 mm wird es der Pflanze ermöglicht, mit den Wurzelspitzen in das Granulat einzudringen und über die Wurzelhaare Substanzen aus den kleineren Poren aufzunehmen.

Die hohe Eigenstabilität des Materials gewährleistet ein Aggregatgefüge, das einen optimalen Luftaustausch (Sauerstoffversorgung) über sehr lange Zeiträume sicherstellt, was für die Pflanzenhaltung außerordentlich wichtig ist und z.B. Krankheiten verhindert.

Durch die gleichmäßige, insbesondere durch das oben angegebene Verfahren optimal einstellbare Struktur des Materials und dessen Kapillarkräfte wird die vorhandene Flüssigkeit innerhalb einer Einheit stets gleichmäßig verteilt und somit an jeder Stelle zur Verfügung gestellt. Flüssigkeitsüber- bzw. -unterangebote werden hierdurch verhindert. Dadurch kann vermieden werden, daß durch örtliche Austrocknung für die Pflanze toxische Konzentrationen der Nährlösung auftreten können, was bei Verwendung von herkömmlichen Blumenerden nur selten sichergestellt werden kann.

Bei der weiteren erfindungsgemäßen Verwendung des Schaumtongranulats als Depot-Träger ergeben sich dessen Vorteile ebenfalls hauptsächlich aus der gleichmäßigen Struktur des Materials und dessen Kapillarkräften, wodurch die Verfügbarkeit der für den jeweiligen Einsatzzweck entscheidenden Stoffe vorhersehbar und steuerbar ist.

Besonders vorteilhaft ist die Vorgehensweise zur Herstellung des Granulates für das Pflanzensubstrat nach der Erfindung in der im wesentlichen in der DE-PS 34 14 965, wie bereits weiter oben angegeben, beschriebenen Vorgehensweise, da dieses Verfahren gänzlich ohne zusätzliche Verfestigungs- oder Bindemittel, wie z.B. Zement, auskommt, da diese für die neuartigen Einsatzgebiete des Materials unerwünschte Stoffe enthalten können, wie z. B. Calzium, Phosphate usw. Das Aufschäumen der Ausgangsmischung sollte dabei bei mindestens 0,3 bar Überdruck erfolgen, wobei dieser Druck bis zum Austrag aus der Düse aufrechterhalten werden muß, da eine Bewegung der geschäumten Masse nur unter Druck durchgeführt werden kann. Sobald der Druck entfällt, sinkt der "freie" Wasseranteil ab, und eine Bewegung im Material würde zur Zerstörung der Porenstruktur führen.

Die Verfahrensführung, die in der DE-PS 34 14 965 vorgeschlagen wird, kann, wie bereits oben erwähnt, auch dadurch abgeändert werden, daß statt der Formung der geschäumten Mischung zu Tonformkörpern, deren Trocknung und Zerkleinerung Preßstränge aus der geschäumten Mischung periodisch unterbrochen werden können, wodurch die direkte Granulatherstellung möglich wird und eine Nachzerkleinerung nicht mehr notwendig ist.

Nachstehend ist die Erfindung anhand eines Ausführungsbeispieles erläutert.

### Beispiel:

500 kg Ziegelton werden mit 200 l Wasser und 400 kg Kieselgur sowie 80 g Natriumpolyphosphat und 100 g Natriumdodecylsulfonat sowie 5 kg rückgeführten Schaumtonfeinteilen in einen Mischer gegeben, etwa 5 Minuten bei ca. 2 bar stark gerührt und die entstehende, hoch thixotrope Tonsuspension in eine Formanlage geführt und in Strängen mit 1 cm Durchmesser in einen Trommeltrockner gebracht. Der Trommeltrockner, der auf 200°C vorgeheizt war, leitet das Schaumtonmaterial nach einer Trockenzeit von 5 Minuten in einen Walzenbrecher. Im Walzenbrecher wird das getrocknete Schaumtonmaterial gebrochen; die zerkleinerten Schaumtonpartikel werden anschließend in einer Siebanlage in eine Kornfraktion mit Größen zwischen 2,5 und 4 mm, die zum Brennofen weitergeleitet wird, und eine Kornfraktion, die Korngrößen unterhalb von 2,5 mm aufweist, die zur Ausgangsmischung zurückgeführt wird, aufgetrennt. Die zum Brennen geführten getrockneten Schaumtonteilchen werden in einen kontinuierlich arbeitenden, auf 1450°C beheizten Ofen geführt und dort bei einer Verweilzeit von 4 Minuten gebrannt. Das gebrannte Keramikprodukt wird zu einem Granulat verarbeitet, welches unmittelbar als Pflanzensubstrat verwendbar ist. Dabei beträgt der pH-Wert 7,2, das Wasseraufnahmevermögen ca. 130 Gew.-%, die innere Oberfläche ca. 180 m²/g und der Porendurchmesser durchmesser 0,8 mm.

## Patentansprüche

1. Verfahren zum Herstellen eines als Pflanzensubstrat geeigneten porösen Keramikgranulates mit gleichmäßiger Porenstruktur mit Porengrößen von < 1 mm, bei dem 45 bis 80 Gew.-Teile Ton, 0 bis 50 Gew.-Teile Kalkspat, Quarzsand, Dolomit, Feldspat, Schamotte, Sepiolith als Zuschlagstoff, 15 bis 30 Gew.-Teile Wasser, 0,01 bis 0,03 Gew.-Teile Verflüssigungsmittel sowie 0,001 bis 0,01 Gew.-Teile Tensid gemsicht und in einer an sich bekannten Dispergieranlage unter Druck (1 bis 10 bar) durch Druckluftzufuhr bei einer Temperatur zwischen Raumtemperatur und 95° C aufgeschäumt werden, wobei ggf. zur Herstellung einer hochviskosen, thixotropen, eigenstabilen Schaumsuspension dem Verflüssigungsmittel entgegenwirkende Mittel eingesetzt werden, und daraufhin ggf. die geschäumte Mischung zu Tonformkörpern geformt wird, die Tonformkörper bei einer Temperatur zwischen Raumtemperatur und 20° C getrocknet werden, die getrockneten Tonformkörper ggf. zerkleinert und unter Rückführen des Feinteils zur Ausgangsmischung gesiebt werden und schließlich die Tonformkörper bzw. die zerkleinerten Tonformkörper mit ausgewähltem Korngrößenbereich bei einer Produkttemperatur im Tonformkörper zwischen 600 und 1500° C, vorzugsweise 700 und 800° C, gebrannt werden, dadurch gekennzeichnet, daß das Aufschäumen der Ausgangsmischung bei mindestens 0,3 bar Überdruck erfolgt, wobei der Druck bis zum Austrag aus der Düse aufrechterhalten wird.

2. Verfahren nach Anspruch 1, dadurch gekennzeichnet, daß als Korngröße ein Bereich von 1 bis 5 mm Granulatdurchmesser gewählt wird.

3. Verfahren nach Anspruch 2, dadurch gekennzeichnet, daß das Granulat hinsichtlich der Korngröße folgende Zusammensetzung gewählt wird: 15 bis 30 Gew.-%, vorzugsweise 25 Gew.%, Granulat mit einem Durchmesser von 1 bis 2 mm; 40 bis 70 Gew.-%, vorzugsweise 60 Gew.-%, Granulat mit einem Durchmesser von 2 bis 4 mm; und 5 bis 20 Gew.-%, vorzugsweise 15 Gew.-%, Granulat mit einem Durchmesser von 4 bis 5 mm.

4. Verwendung des nach einem der vorangehenden Ansprüche hergestellten Pflanzensubstrats als Depot-Träger für Nährstoffe, Düngestoffe und/oder Pestizide.

## Claims

1. Process for the preparation of porous ceramics granules which are suitable as a plant substrate and have a uniform pore structure of pore sizes of < 1 mm, in which 45 to 80 parts by weight of clay, 0 to 50 parts by weight of calcareous spar, quartz sand, dolomite, felspar, chamotte, sepiolite as additive, 15 to 30 parts by weight of water, 0.01 to 0.03 part by weight of liquefying agent and 0.001 to 0.01 part by weight of surfactant are mixed and foamed in a dispersing apparatus known per se under pressure (1 to 10 bar) by feeding in pressurised air, at a temperature between room temperature and 95°C, where, if appropriate, agents are employed which counter-act the liquefying agent so as to prepare a highly-viscose, thixotropic, intrinsically stable foam suspension, whereupon, if appropriate, the foamed mixture is shaped into shaped clay articles, the shaped clay articles are dried at a temperature between room temperature and 20°C, the dried shaped clay articles are, if appropriate, comminuted and screened, the fine particles being recycled to the starting mixture, and, finally, the shaped clay articles, or the comminuted shaped clay articles having a selected particle size range, are fired at a product temperature inside the shaped clay article between 600 and 1500°C, preferably 700 and 800°C, characterised in that the foaming of the starting mixture is effected at a superatmospheric pressure of at least 0.3 bar, the pressure being maintained up to the point of discharge from the nozzle.

2. Process according to Claim 1, characterised in that the particle size chosen is in the range from 1 to 5 mm granule diameter.

3. Process according to Claim 2, characterised in that the following composition is selected for the granules with regard to particle size: 15 to 30 % by weight, preferably 25 % by weight, granules having a diameter from 1 to 2 mm; 40 to 70 % by weight, preferably 60 % by weight, granules having a diameter from 2 to 4 mm; and 5 to 20 % by weight, preferably 15 % by weight, granules having a diameter of 4 to 5 mm.

4. Use of the plant substrate prepared by one of the preceding claims as a slow-release carrier for nutrients, fertilisers and/or pesticides.

## Revendications

1. Procédé de production d'un granulat de céramique poreuse appropriée comme substrat de plante à structure poreuse régulière, avec des tailles de pores < 1 mm dans lequel on mélange 45 à 80 parties en poids d'argile, 0 à 50 parties en poids de calcite, sable de quartz, dolomie, feldspath, chamotte, sépiolite comme additifs, 15 à 30 parties d'eau en poids, 0,01 à 0,03 partie en poids d'agent fluidifiant ainsi que 0,001 à 0,01 partie en poids de tensioactif et on fait mousser dans une unité de dispersion comme sous pression (1 à 10 bar) par injection d'air comprimé à une température comprise entre la température ambiante et 95°C, en pouvant utiliser le cas échéant pour préparer une suspension de mousse très visqueuse, thixotrope et stable un agent s'opposant au fluidifiant, et ensuite on moule le mélange expansé en corps moulés d'argile, on sèche les corps moulés d'argile à une température comprise entre la température ambiante et 200°C, le cas échéant on broie les corps moulés d'argile séchés et on tamise en recyclant la fraction fine dans le mélange de départ et enfin on calcine les corps moulés d'argile ou les corps moulés d'argile broyés qui ont un intervalle de granulométrie sélectionné, entre 600 et 1500°C, de préférence 700 et 800°C dans le corps moulé d'argile, caractérisé en ce que le moussage du mélange de départ a lieu avec une surpression d'au moins 0,3 bar, la pression étant maintenue jusqu'à la sortie de la buse.

2. Procédé selon la revendication 1, caractérisé en ce qu'on choisit comme taille granulométrique un intervalle de 1 à 5 mm de diamètre de granulat.

3. Procédé selon la revendication 2, caractérisé en ce que le granulat, du point de vue granulométrie présente la composition suivante : 15 à 30% en poids, de préférence 25% en poids de granulat avec un diamètre de 1 à 2 mm ; 40 à 70% en poids, de préférence 60% en poids de granulat avec un diamètre de 2 à 4 mm ; et 5 à 20% en poids, de préférence 15% en poids, de granulat avec un diamètre de 4 à 5 mm.

4. Utilisation d'un substrat de plantes préparé selon l'une des revendications précédentes comme support-réservoir de substances nutritives, engrais et/ou pesticides.
